# EUROPEAN PATENT APPLICATION

(11) **EP 4 635 617 A1**
(43) Date of publication of application: **22.10.2025**
(21) Application number: 24020119.4
(22) Date of filing: 16.04.2024
(51) Int. Cl.: B01J 8/06, B01J 19/24

(54) **APPARATUS AND METHOD FOR PRODUCING A REACTION PRODUCT**

(71) Applicant: Linde GmbH, 82049 Pullach (DE); BASF SE, 67056 Ludwigshafen (DE); SABIC Global Technologies B.V., 4612 PX Bergen op Zoom (NL)
(72) Inventor: Habla, Florian, 82049 Pullach (DE); Posselt, Heinz, 82049 Pullach (DE); Hofstätter, Martin, 82049 Pullach (DE); Zellhuber, Mathieu, 82049 Pullach (DE); Rößler, Felix, 82049 Pullach (DE)
(74) Representative: Gellner, Bernd

(57) **Abstract**

An apparatus for performing a chemical reaction is proposed, the apparatus including a reactor chamber (B) and reaction tubes (T) arranged in the reactor chamber (B), the reaction chamber (B) being surrounded by a thermally isolating reactor wall (W), wherein the reaction tubes (T) are electrically interconnected at a first position with a first electrical starbridge (S, S2, S4) and at a second position with a second electrical starbridge (S1, S3), the first and the second positions being positions within the reaction chamber (B), wherein the reaction tubes (T) are electrically connected to phases of an electrical power supply (AC) using connectors (L1, L2, L3, ...) between the first and second positions, and wherein at least one of the first electrical starbridge (S, S2, S4) and the second electrical starbridge (S1, S3) fluidly interconnects the reaction tubes (T) which it electrically interconnects. A corresponding method is also part of the present disclosure.

## Description

The present disclosure relates to an apparatus and to a method for producing a reaction product.

### Field

In a number of processes in the chemical industry, reactors are used in which one or more reactants are passed through heated reaction tubes where they undergo catalytic or non-catalytic reactions. Heating is used in particular to overcome the activation energy required for the chemical reaction to take place. The reaction can be endothermic or, after overcoming the activation energy, exothermic. The present disclosure relates in particular to strongly endothermic reactions.

Examples of such processes are steam cracking, various reforming processes, in particular steam reforming, dry reforming (carbon dioxide reforming), mixed reforming processes, processes for dehydrogenating alkanes and the like. In steam cracking, the reaction tubes are guided through the reactor in the form of coils which have at least one reverse bend in the reactor, whereas in steam reforming, tubes running through the reactor without a reverse bend are typically used.

If, hereinbelow, the term "coil" will be used, this shall not exclude other forms of reaction tubes, particularly not straight reaction tubes. Embodiments as disclosed herein are suitable for different processes. Purely by way of illustration, reference is made to the articles "Ethylene", "Gas Production" and "Propene" in Ullmann's Encyclopedia of Industrial Chemistry in the current versions.

The reaction tubes of reactors of the type mentioned are conventionally heated by using burners, this also being referred to as "fired reactors" hereinbelow. The reaction tubes are guided through a combustion chamber in which the burners are also arranged. However, the demand for reaction products which are produced without or with reduced local carbon dioxide emissions is currently increasing. For this reason, the reaction tubes may be heated electrically. "Hybrid" heating including combustion and electrical heating has also been proposed, and embodiments as disclosed herein may extend to all possible forms of heating.

There is a need for improved concepts for electrically heating reaction tubes of corresponding reactors overcoming disadvantages of the prior art.

### Summary

Against this background, apparatus and methods including the features of the independent claims are proposed. Embodiments are the subject of the independent claims and of the description that follows.

The apparatus for performing a chemical reaction provided according to the present disclosure includes a reactor chamber and reaction tubes arranged in the reactor chamber, the reaction chamber being surrounded by a thermally isolating reactor wall, wherein the reaction tubes are electrically interconnected at a first position with a first electrical starbridge and at a second position with a second electrical starbridge, the first and the second positions being positions within the reaction chamber, wherein the reaction tubes are electrically connected to phases of an electrical power supply using connectors between the first and second positions, and wherein at least one of the first electrical starbridge and the second electrical starbridge fluidly interconnects two or more of the reaction tubes which it electrically interconnects. If reference is made herein of the connectors being "between" the first and second positions, this is intended to refer to an electrical connection and not to a mere geometric arrangement. That is, the connectors between the first and second positions electrically connect the starbridges at these first and second positions.

The apparatus proposed herein and according to the embodiments discussed below offer significant technical and economic advantages compared to the prior art, which include a reduction of thermal stresses in connecting piping transitioning in/out of the coilbox, i.e. the reaction chamber, through its walls, a reduction in number of external electrical connections between hot piping connections and electric potential equalization lines, an improved possibility for further scale-up/savings by foreseeing parallel phase connections within a single coil group, the fact that all high-ampere potential equalization currents are contained within the coilbox or reactor chamber, thereby reducing the risk of overheating of connection piping entering or leaving the coilbox and the risk of significant leakage currents to other plant areas and also reducing heat losses. Moreover, as the Joule heat dissipated by equalization currents within the coilbox will to a very large extent (typically more than 95%) be absorbed by the process gas, the energy efficiency of the reactor system is improved compared to systems with externally placed starbridges.

According to certain embodiments as disclosed herein, the second electrical starbridge fluidly interconnects the reaction tubes which it electrically interconnects and fluidly connects these reaction tubes to a gas cooler, in particular a common gas cooler. Already providing the "outlet" starbridge in a form fluidly interconnecting the reaction tubes provides significant advantages as further discussed below, as it is the outlet side of the reaction tubes, where they are conventionally individually connected to gas coolers. The conventional individual connection piping between the outlet of a single reaction tube and a single gas cooler experiences maximum thermal stresses.

According to certain embodiments as disclosed herein, a third electrical starbridge and further reaction tubes are provided, the second electrical starbridge at least electrically interconnecting the further reaction tubes at the second position, and the third electrical starbridge at least electrically interconnecting the further reaction tubes at a third position, the further reaction tubes being electrically connected to the phases of the electrical power supply using further connectors between the second and the third positions. In other words, different inlet starbridges, whether these are fluidly interconnecting the reaction tubes or not, and a single outlet starbridge can be provided, allowing for advantageous arrangements in some circumstances. As will be understood, configurations in which multiple outlet starbridges and a single inlet starbridge are used are within the scope of the present disclosure as well.

According to certain embodiments as disclosed herein, the reaction tubes which the second electrical starbridge electrically and fluidly interconnects merge in the second electrical starbridge and/or in proximity to the second electrical starbridge in an angle of more than 10 and less than 80°. As further discussed below, this comes closest to the ideal version of a starbridge being compacted to a single starpoint. In other embodiments, reaction tubes which the first electrical starbridge electrically and fluidly interconnects may also diverge in a corresponding manner therefrom. That is, the reaction tubes which the first and/or the third electrical starbridge electrically and fluidly interconnect may also, in such an embodiment, emerge from the first and/or third electrical starbridge and/or from the proximity of the first and/or third electrical starbridge in an angle of more than 10 and less than 80°.

According to certain embodiments as disclosed herein, the electrical power supply is configured to provide an electrical current comprising N phases, wherein a number of the connectors is M, and wherein each of the connectors is connected to one of M reaction tubes, wherein N is an integer of at least two, e.g. two, three, four, five, six, seven, eight, nine or ten, and particularly up to ten, and wherein M is equal to N or a multiple of N. That is, a single set of reaction tubes or a plurality of sets may be provided with electrical energy using the same power supply.

According to certain embodiments as disclosed herein, M is a multiple of N and at least two adjacent ones of the M reaction tubes are connected to the same of the N phases of the electrical power supply. This allows for a particularly easy wiring or interconnection as the corresponding tubes can be connected in parallel.

Alternatively, however, there may be certain embodiments, where M is a multiple of N and wherein no adjacent ones of the M reaction tubes are connected to the same of the N phases of the electrical power supply. This particularly allows for reducing electromagnetic fields induced by alternating currents and, thus, enhancing electric efficiency of such a setup.

According to certain embodiments as disclosed herein, the first electrical starbridge fluidly interconnects the reaction tubes which it electrically interconnects and fluidly connects these reaction tubes to a feed gas line. In such an embodiment, also thermal stresses at the inlet side can be reduced.

According to certain embodiments as disclosed herein, the first electrical starbridge is separated by a thermal isolation from an interior of the reactor chamber. This results in wall temperatures close to the fluid inlet temperatures and reduces the risk of excessive coking at this location.

According to certain embodiments as disclosed herein, one or more laval nozzles are provided in or in proximity to the first electrical starbridge. This provides the advantage of a particularly good (mass) flow distribution to the reaction tubes.

According to certain embodiments as disclosed herein, the reaction tubes have one or multiple return bends and/or one or multiple splits and/or one or multiple mixing pieces in the reactor chamber. Embodiments as disclosed herein may therefore be used for different reactions for which bent reaction tubes ("coils") or straight, unbent reaction tubes or a combination thereof are used.

According to certain embodiments as disclosed herein, the reaction tubes are configured for being electrically resistance heated using the phases of the electrical power supply. Additional or supplementary heating by other means, such as electric radiation heating and combustion heating, or alternative heating concepts, is not excluded hereby and may be part of further embodiments.

According to certain embodiments as disclosed herein, said reaction may be selected from a steam cracking reaction, a partial oxidation reaction, various reforming reactions, in particular steam reforming, dry reforming (carbon dioxide reforming), mixed reforming, a reaction for the dehydrogenation of alkanes, a reverse water gas shift (RWGS) reaction of carbon dioxide and hydrogen to carbon monoxide and water, a dehydrogenation of oxygenates such as a reaction of methanol to formaldehyde and hydrogen, cracking of ammonia to yield nitrogen and hydrogen, dehydrogenation of socalled liquid organic hydrogen carriers (LOHC) as known in the field concerned, and reforming of methanol and glycerol (as far as not already included by the term "reforming" used above).

A method as proposed herein comprises the steps of providing an apparatus as proposed herein, passing a reaction feed through the reaction tubes, and resistance heating the reaction tubes using the phases of the electrical power supply.

As to further details and advantages of such a method, reference is made to the explanations above regarding the apparatus proposed herein and its different embodiments. Particularly, such a method may, in embodiments as proposed herein, use an apparatus according to any of the embodiments as discussed herein.

### Figures

Embodiments as disclosed herein will now be described, by way of example only, with reference to accompanying drawings, in which
Figure 1 illustrates an apparatus not according to an embodiment; and
Figures 2, 3A and 3B, 4 to 14, 15A to 15C, 16, 17A and 17B illustrate apparatus according to different embodiments as proposed herein.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to certain embodiments disclosed herein likewise may apply to methods, processes, procedures, etc. according to corresponding embodiments.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate and technically sensible combinations of the disclosed elements, components, features, parts, steps, means, etc., other than those specifically described herein. In addition, this disclosure may include other inventions not presently claimed, but which may be claimed in future, particularly when encompassed by the scope of the independent claims.

Different solutions for electrically heating the reaction tubes of a tubular reactor as discussed in the outset are known.

For example, EP 3 075 704 A1 discloses that the reaction tubes are heated by resistance heating. A multiphase voltage is used and the external fluid collection header is used as starbridge for the equalization of the electrical currents. This solution may have disadvantages in certain cases as it constantly requires high current intensities to leave the reactor vessel via the outlet connection lines. The thermally insulated box wall transition requires special considerations and design measures to avoid local overheating under all operating conditions.

WO 2021/160614 A1, WO 2022/096180 A1 and WO 2022/171582 A1 propose using single-pieced starbridge components which electrically connect fluidically separate reaction tube conduits within the hot coilbox. This is referred to as an "intertube starbridge" herein. Such embodiments feature only one electrical supply connection per reaction tube, wherein the reaction tubes connected to a same starbridge are connected to N electrical phase connectors with a phase shift of 2 π/N, wherein N is an integer of two or more, so that a potential equalization to a level close to ground can be achieved through the starbridge.

Compared to alternative embodiments with multiple electrical phase connections within the same reaction tube, referred to as an "intratube starbridge" herein, the intertube starbridge may offer the advantage of a reduced number of electrical connections and a higher voltage drop per single phase consumer, which is beneficial for cost reduction in the electrical supply system. Different embodiments with intertube or intratube starbridges are for example illustrated in WO 2021/160614 A1.

Hereinbelow, for reasons of generality, starbridges are referred to as "electrical interconnection elements" as well, and whenever reference is made to a "starbridge" herein, this may also be understood as a more general electrical interconnection, irrespective of whether "star" connections are formed. However, preferred embodiments as disclosed herein include such star connections and therefore feature true starbridges as generally known in the field.

Nevertheless, the single-piece construction (preferably as massive, cast piece) of an intertube starbridge horizontally placed within the coilbox in a high-temperature environment (typically above 800 °C) leads to noticeable thermal elongation of the starbridge during furnace operation. The distance between parallel reaction tubes connected by the same starbridge will therefore vary along the tube position and differ from a centre of the coilbox to a periphery thereof.

In particular on the reaction tube outlet side, this varying tube distancing may lead to critical resulting pipe stresses at high temperatures. This is especially due to the preferably short tube run length between the coilbox outlet and the inlet of the downstream product gas cooler, to limit residence time at high temperature and minimize unwanted side reactions. The downstream product gas coolers are typically horizontally fixed within the static steel structure with no noticeable horizontal thermal elongation movements. This is particularly true for vertically installed steam-generating product gas coolers. At the cooler location, the distance between neighbouring process tubes is thus almost constant independently of the furnace temperature.

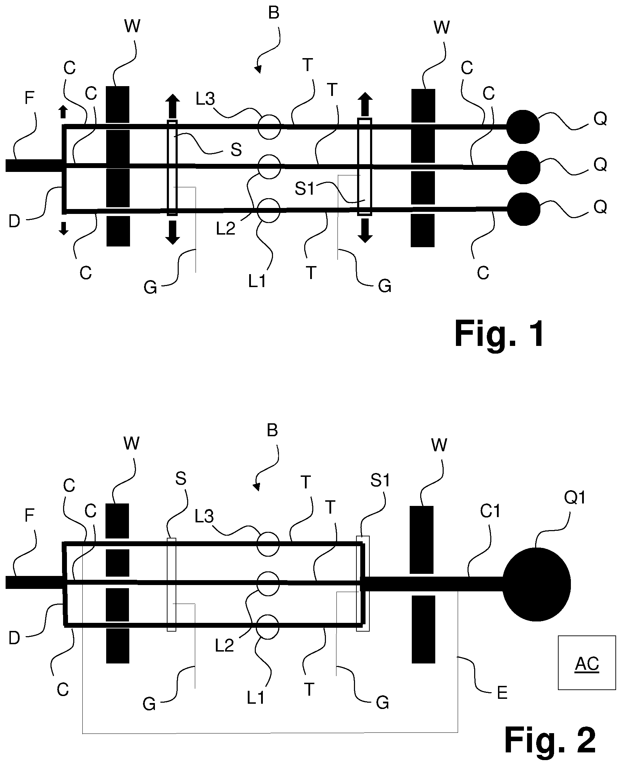

Reference is made to Figure 1 in which an apparatus for steam cracking is schematically illustrated in a partial view. Figure 1 shows a bird's eye view on a reactor of which box walls W of a firebox or coilbox, also referred to as reactor chamber B herein, are illustrated. Three reaction tubes T are illustrated which may be connected to a common feed line F on an inlet side and each of which is connected to a cracked gas or quench cooler Q at a fixed position on an opposite side. Reaction tubes T are each connected to connection tubes C which are guided through passages in the walls W. Connection tubes C can also be formed integrally with the reaction tubes T or reaction tubes T and connection tubes C may be formed as a contiguous tube, and this shall be included if "connection tubes" are mentioned herein. If, herein, no connection tubes are individually labelled, this shall not mean that there are no connection tubes present.

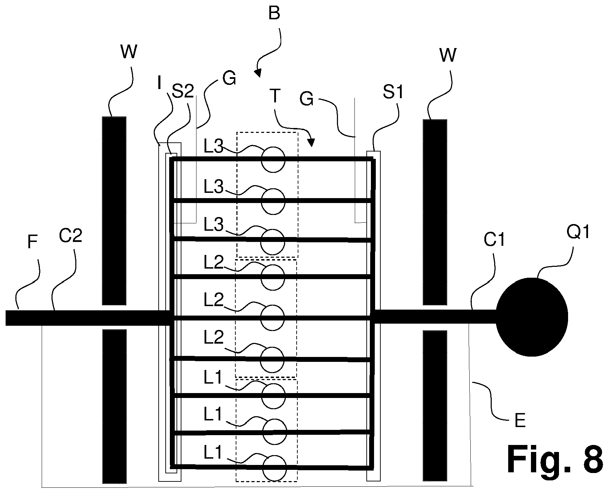

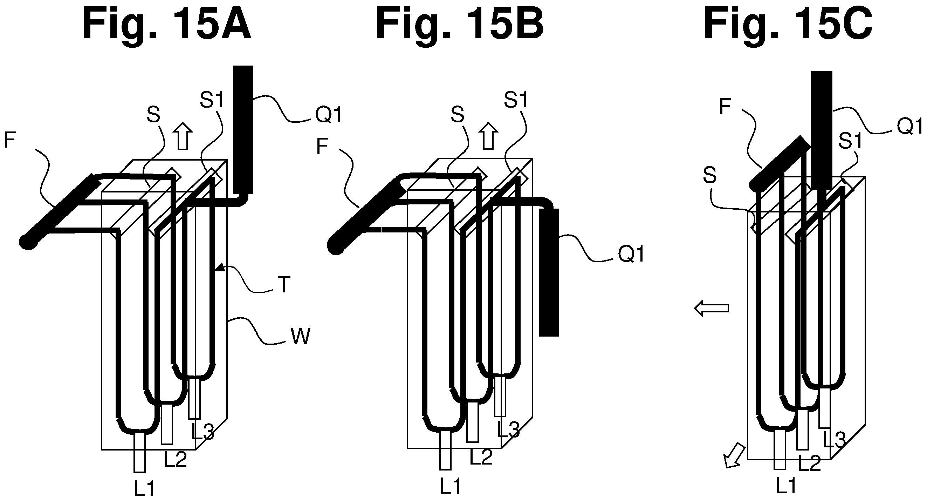

Two rigid star bridges S are provided as "intertube starbridges". At a centre of the reaction tubes, which form a U bend extending to the bottom of the reactor such as, for example, discussed in connection with Figures 2, 8A and 8C of WO 2021/160614 A1, connection elements L1, L2 and L3 are provided which are connected to the phases of a multiphase voltage (these connections are indicated as "U, V and W" in Figures 2 and 8C of WO 2021/160614A1). Reference may, as to the arrangement of the reaction tubes T, is made to Figures 15A to 15C herein. (Electrical) ground connectors are indicated with G.

Thermal expansion of the star bridges S is illustrated with arrows adjacent to them. The connection tubes C are subjected to considerable stress by such a thermal expansion. This is particularly the case for the outlet piping, i.e. the connection tubes C at the side of the coolers Q, as these are, as mentioned, short and the coolers Q are at a fixed position. For the inlet piping, i.e. the connection tubes C at the side of the feed line F and the distributor D, where an expansion is illustrated with arrows as well, stress issues may arise to a lesser extent, as upstream process equipment (e.g. preheaters) may be located at greater distance because no constraints with regard to residence time exist and thereby more flexible piping support concepts may be realized.

In case of the provision of inlet headers or distributors D connecting feed lines F close to the coilbox or reactor chamber B or its walls W (as shown in Figure 1), the same header line will e.g. also be subjected to thermal expansion, which will be typically less than the thermal expansion of the inlet starbridge as a result of a lower average temperature of the metal piece, as also indicated with (smaller) arrows in Figure 1. Therefore, also on the inlet side, the pipe-stress-related risk of an intercoil starbridge exists, but it may be avoided by different means.

An additional disadvantage of the prior art solution is the necessity for additional potential equalization lines outside the furnace coilbox or reactor chamber B, which are connected to each of the inlet and outlet connecting pipe sections. Such equalization lines are required to level out residual current imbalances, as well as for the detecting potential electrical faults by monitoring electrical currents in earth connections connected to said outside potential equalization line. Each connection to a potential equalization line requires a constructionally complex assembly, since on both inlet and outlet sides a permanent electric connection must be established to insulated pipes operating at high temperatures. A reduction of outside equalization connections is thus beneficial for reducing investment cost of the reactor system.

The solution according to embodiments proposed herein includes providing in at least one of the two intertube starbridges S a fluid connection between the reaction tubes T connected by the same starbridge S. In the inlet starbridge this fluid connection would function as flow distributor, while in the outlet starbridge this fluid connection would function as flow mixer. As a result, a starbridge S according to embodiments proposed herein would carry out a fluid exchange between neighbouring coils in its void inner volume, as well as in its solid wall material an electrical current exchange between neighbouring coils.

As a result, a starbridge S as proposed herein placed within the coilbox or reactor chamber B would feature only one inlet fluid/pipe connection (for an inlet starbridge S) or only one outlet fluid/pipe connection (for an outlet starbridge S), which may serve as a horizontal fix point along the length axis of the starbridge. In such a setup according to an embodiment proposed herein, the thermal elongation of the starbridge does not cause the previously mentioned pipe stress issues that arise with multiple parallel inlet and outlet connections.

A first embodiment with a (conventional) inlet starbridge S not fluidly interconnecting the reaction tubes T and an outlet starbridge S1 which additionally performs the function of a fluid collector according to an embodiment proposed herein is illustrated in Figure 2, where other elements corresponding or essentially corresponding, in function and/or mechanical construction, to Figure 1 are indicated with like reference numerals. An electrical power supply is indicated as a box AC, which may be present in all embodiments further described below, even if not specifically indicated.

Unlike in the embodiment not forming part of the present invention shown in Figure 1, the outlet starbridge S1 is used for fluid collection, in addition to the electric potential equalization function. Consequently, only one outlet connection tube C1 is attached to the outlet starbridge S1, with said connection being routed outside the coilbox or reactor chamber B through wall W and connected to a shared cracked gas cooler Q1 for the shown three reaction tubes T. In an embodiment, a static support, particularly in the form of vertical hangers, of the outlet starbridge S1 allows for compensation movements of the entire outlet starbridge S1, particularly in a right/left direction, in order to account for thermal expansion of the outlet connection tube C1. Likewise, compensation movements of the opposite ends of the outlet starbridge S1 in an upper/lower direction are possible in the embodiment shown in Figure 2, in order to compensate for a thermal expansion of the outlet starbridge S1 itself. In the setup shown, the centre of the outlet starbridge S1 in a top/down direction will not show significant thermal expansion movements, therefore minimizing pipe stresses in the outlet connection C1 caused by bending.

The outlet starbridge S1, in certain embodiments, shows an increased material-filled cross-section compared to the vertical straight reaction tube sections to enable an effective potential equalization in the outlet starbridge S1. Additional wiring in the form of a potential equalization line E can be provided.

The embodiment shown in Figure 2 consequently shows only one connection point of the external potential equalization line on the outlet side, while three connection points are shown on the inlet side, due to the inlet starbridge S being still provided in a conventional form. However, with the embodiment shown in Figure 2, a number of disadvantages of entirely conventional designs are overcome.

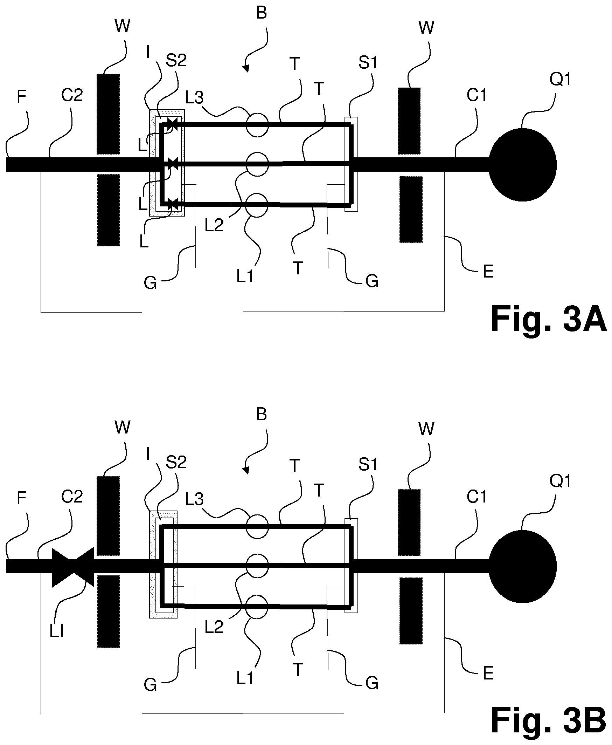

In Figures 3A and 3B, further embodiments as provided herein are illustrated. In these embodiments, also the inlet starbridge, which is indicated as S2, is configured to provide an interconnection between the reaction tubes T or, more precisely, is configured to distribute fluid from feed line F to the reaction tubes T.

The inlet starbridge S2 acts as flow distributor and is thus equipped with a flow channel spanning over a certain fraction of or the entire span between the three connected reaction tubes T shown here. Inlet starbridge S2 is connected to feed line F via a connection tube C2. In certain embodiments, such as shown in Figure 3A, in an inlet starbridge S2, three Laval nozzles L are located within the inlet starbridge to equalize flows into all connected reaction tubes. This is not the case in the embodiment shown in Figure 3B. Typically, Laval nozzles L are not installed within the hot furnace box or reactor chamber B to avoid excessive coking and flow restrictions in this region.

In certain embodiments, an inlet starbridge S2 with flow distribution function as well as the part of its inlet piping, which lies inside the coilbox or reactor chamber B, may therefore comprise a thermal insulation I at the outside to minimize radiative heat ingress from the furnace box or reactor chamber B environment into the inlet starbridge S2. This results in wall temperatures at the Laval nozzles L close to the fluid inlet temperatures and reduces the risk of excessive coking at this location. The Laval nozzles L do not necessarily need to be integrated into the single piece inlet starbridge S2. As a first alternative, the Laval nozzles L can be placed in the depicted three discharge lines of the inlet starbridge. In this case, the Laval nozzles L need to be placed as close as possible to the starbridge and the piping between inlet starbridge and the Laval nozzle L as well as the Laval nozzle L itself may be thermally insulated on the outside as well.

As the embodiment shown in Figure 3B, the three Laval nozzles L associated to the three discharge lines in the vicinity of the starbridge S2 to the reaction tubes T, as shown in Figure 3A, can be replaced by a single Laval nozzle L in the connection tube C2 to the inlet starbridge outside of the furnace box or reactor chamber B, eliminating the need for thermal insulation. The embodiments shown in Figures 3A and 3B feature only one connection point of the external potential equalization line E at the outlet side and one connection point at the inlet side.

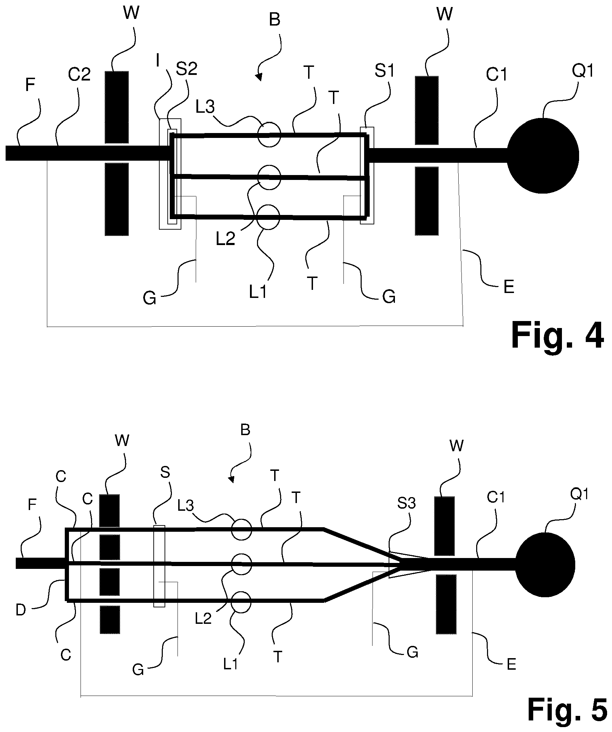

While in the embodiments shown in Figures 2, 3A and 3B, the single connecting tubes C1 and/or C2 (outlet or inlet) to the starbridges S, S1 and S2 are located at the central symmetry line of the starbridges S, S1 and S2, it may also be advantageous for improved flow/pressure drop equalization among the parallel reaction tubes T to foresee an alternative embodiment, which is shown in Figure 4, wherein the tapping point of the single connection lines C1 and/or C2 is horizontally shifted with respect to the tapping points of the reaction tubes T on the respective other side of the starbridges S1, S2. The shift may be present for only one or both of the starbridges S1, S2, in similar or different manner.

In a yet further embodiment, as illustrated in Figure 5, a starbridge S3 is reduced in its horizontal elongation, with reaction tubes T continuously converging relative to each other towards the said starbridge S3. The starbridge S3, being an outlet starbridge, is hereby compacted to a Y-piece in which the fluid flows are merged and the electrical potential is equalized. This comes closest to the ideal version of a starbridge being compacted to a single starpoint. As a result, the weight of such a compact outlet starbridge S3 is significantly reduced compared to a stretched starbridge as shown in previous embodiments or known from the prior art. A similar compact Y-piece may analogously be used for the inlet starbridge S, which is shown in Figure 5 in a conventional configuration, with or without integrated Laval nozzles L and surrounding thermal insulation. In particular when using such Y-piece design for the inlet starbridge S, a good flow distribution among the three reaction tubes T may be achieved even without integrated Laval nozzles. In such an embodiment, it may be preferred to provide only one Laval nozzle L1 outside the furnace box or reactor chamber B, which ensures an equal flow distribution to all coil groups within the electrical furnace.

In an implementation of any of the previously shown embodiments, the reaction tube length of all three reaction tubes T or coils is equal to minimize fluid flow imbalance, but also electrical current imbalances. Accordingly, straight vertical tube lengths of outer reaction tubes T may be reduced with regard to a central tube T to compensate for the additional length of the oblique sections shown in or the flow length within the starbridges S, S1, S2 and S3 in any other of the Figures shown earlier.

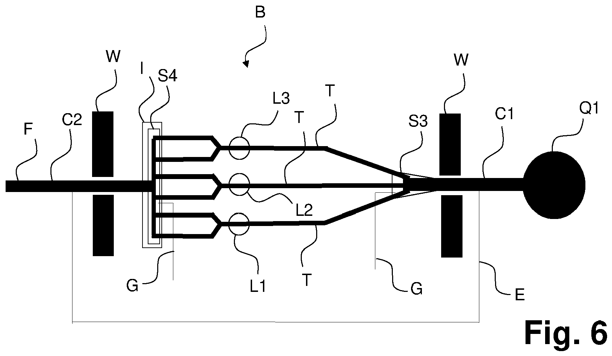

An alternative embodiment shown in Figure 6 comprises a split coil design, e.g. a design referred to as PC1-1 by the applicant and in the field concerned, in combination with both the inlet starbridge S4, and the outlet starbridge S3 being executed according to embodiments already discussed in connection with unsplit reaction tubes T before.

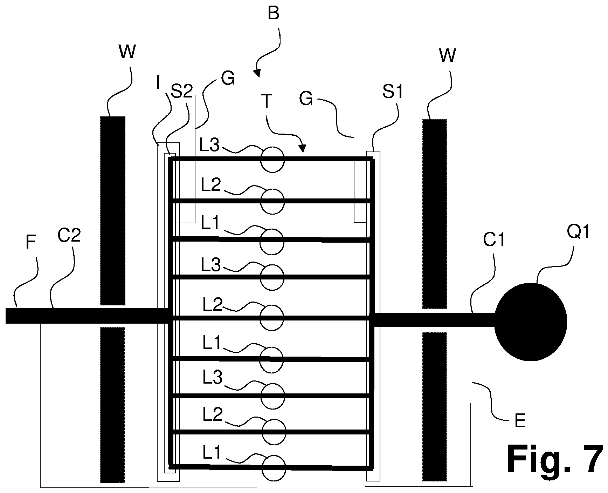

Further embodiments shown in Figures 7 and 8 illustrate the extension to larger groups of coils or reaction tubes T connected by inlet and outlet starbridges S1, S2. In this and the subsequent Figures, certain elements are not individually labelled as such elements have been extensively described before.

In both embodiments shown in Figures 7 and 8, a 3-phase current supply L1, L2, L3 is provided, but with here three connections for each phase, which are preferably connected together to the same phase outlet of a single high-current transformer. This enables in particular scaling of the high-current transformer, and is facilitated by the present invention as the increased length of both starbridges in these embodiments does not lead to increased pipe stresses in the inlet and outlet connection piping.

While the embodiment shown in Figure 7 shows adjacent coils or reaction tubes T with alternating phase connections, which is beneficial for lowering magnetic field intensities and inductive interferences in the system, the embodiment shown in Figure 8 includes adjacent coils being connected to the same electrical phase, what offers the possibility to lower the number of electrical supply connections entering the coilbox or reactor chamber B by using only one supply connection for all parallel phase consumers.

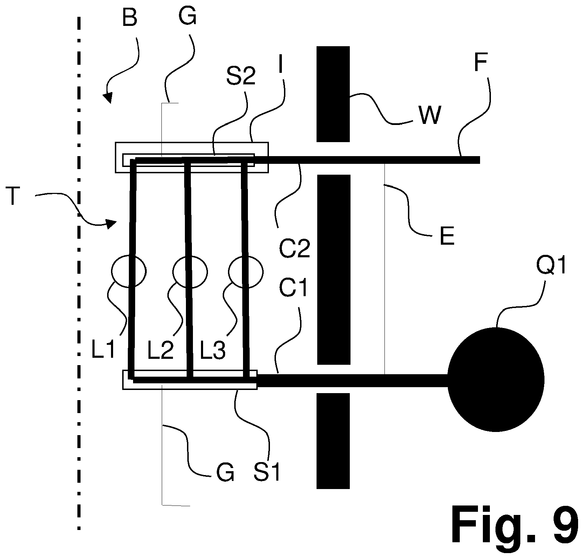

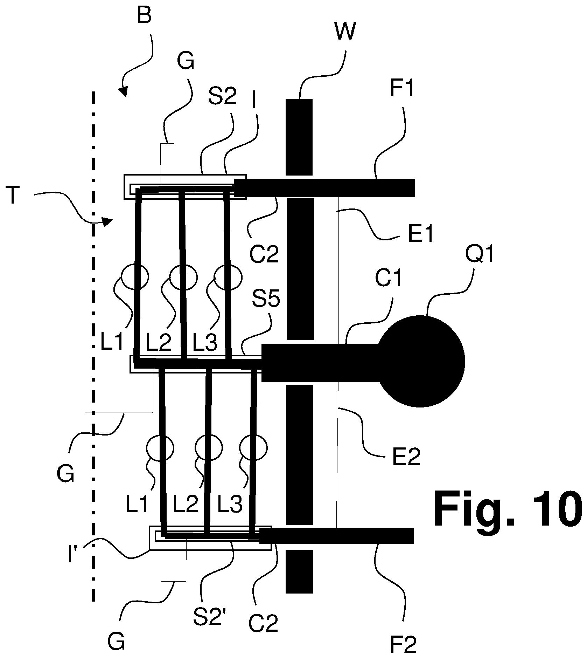

As variations to previously shown embodiments, it is also possible, within the scope of the present disclosure, to insert the one or more inlet piping connections C2 and the one or more outlet piping connections C1 via the same coilbox wall W and/or to orient the length axis of inlet and/or outlet starbridge connections C2, C1 along the same direction as the connecting inlet and/or outlet piping connections. Multiple embodiments representative of such alternative arrangements are shown in Figure 9, which is an adaptation of the embodiment shown in Figure 4 above. An embodiment shown in Figure 10 shows a variant of the embodiment shown in Figure 9, where a single outlet starbridge S5 is used in combination with two inlet starbridges S2 and S2' according to the embodiments as proposed herein. Two parallel 3-phase current supplies are required in this embodiment, which are preferably connected to a single 3-phase high-current transformer system. Two potential equilibration lines E1 and E2 are provided.

The same concept can be applied for combining two outlet starbridges with a single inlet starbrige, also using two parallel 3-phase current supplies (no explicit embodiment shown). More generally, as for example illustrated in the embodiment shown in Figure 10, connection setups with unequal numbers of inlet and outlet starbridges can be used according to the present invention.

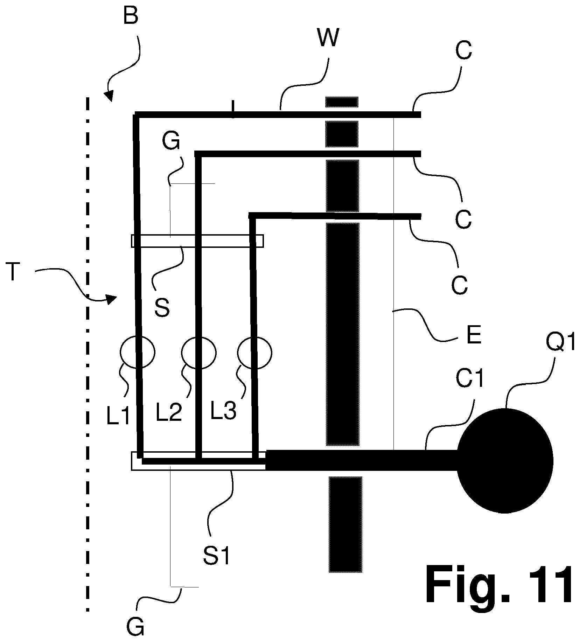

Similar to the embodiment shown in Figure 9, in the embodiment shown in Figure 11, inlet and outlet pipe connections C, C1 are passed through the same box wall W and the orientation of both starbridges S and S1 is in parallel thereto. The embodiment shown in Figure 11 is an adaptation of the embodiment shown in Figure 2.

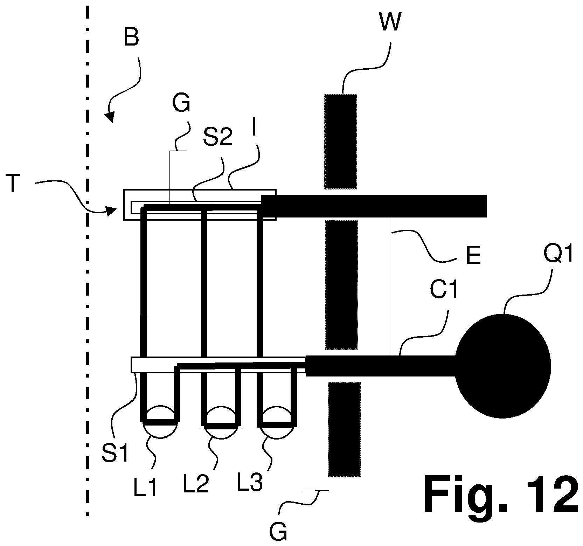

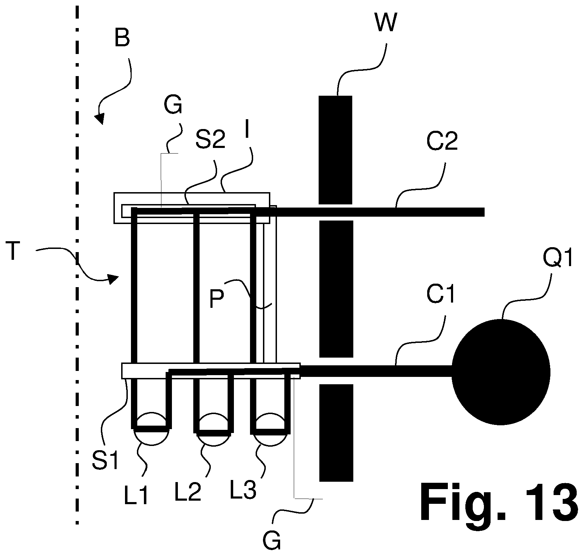

Embodiments shown in Figures 12, 13 and 14 show alternative designs where the connection pins L1, L2 and L3 for the phase current supply are not placed in between the two inlet and outlet starbridges S1, S2 in such a horizontal cross section (as shown in Figures 12 and 13) and/or where flow directions in the horizontal cut plane between both starbridges S1, S2 may be altered at one or more locations (as shown in Figures 12, 13 and 14). The embodiment shown in Figure 13 further has the special feature of a potential equalization bridge P between the inlet and outlet connecting piping C2, C1 and/or the starbridges S1, S2 within the coilbox B, which is preferably executed in a similar one-piece, cast construction as the starbridges S1, S2. This embodiment avoids the need for any additional external potential equalization connection E, as shown before, and thus simplifies the connecting piping C1, C2 design outside the coilbox B.

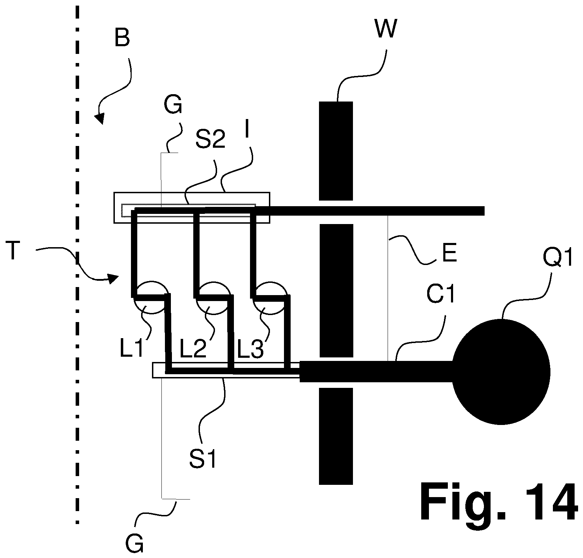

An important aspect of the embodiment shown in Figure 14 is the flow direction change between the starbridges S1 and S2. The flow direction is directed downwards leaving S2, then turns right in the vicinity of the connections L1 to L3 and turns downwards again when leaving L1 to L3 until reaching S1 starbridge.

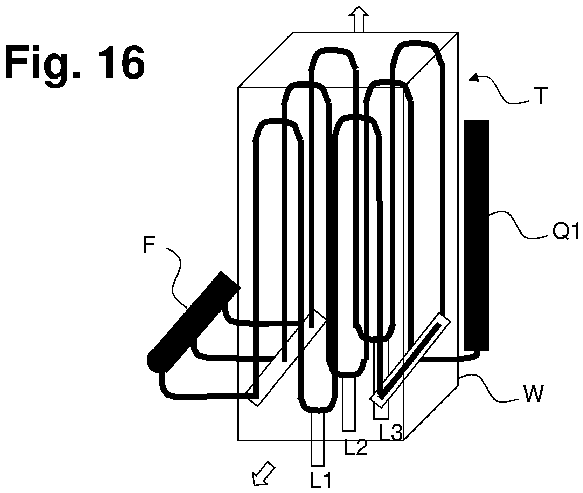

Preferably, all starbridge elements S, S1, S2, S3, S4 in all embodiments shown before are electrically connected to the N-conductor line of the supplying high-current transformer. Nevertheless, the invention may also be applied without a N-conductor connection to the supply transformer for one or more of the starbridges S, S1, S2, S3, S4. Various general three-dimensional arrangements of the reaction tubes T themselves, but also of the inlet headers D and/or the cracked gas coolers Q1 are possible, thereby also enabling various preferred assembly directions, as illustrated in Figures 15A to 15C and 16. Three-dimensional general arrangements of system implementations corresponding to the embodiment shown in Figure 2 are illustrated in Figures 15A to 15C, including an indication of preferred assembly directions depending e.g. on relative positioning of cracked gas cooler Q1 and inlet header D with regard to the inlet starbridges S. For vertical assembly, inlet fluid header D and cracked gas cooler Q1 are preferentially horizontally displaced with regard to the starbridges S, S1, as shown in Figure 15A and 15B. Contrary, for horizontal assembly, inlet fluid header D and cracked gas cooler Q1 are preferentially vertically displaced with regard to the starbridges S, S1 as shown in Figure 15C.

Figure 16 shows an alternative general arrangement of a system implementation according to the embodiment shown in Figure 2, where inlet and outlet fluid connections C2, C1 as well as electrical phase supply connections L1, L2, L3 are located close to the bottom of the reactor vessel or coilbox or reactor chamber B. Preferably thermal expansion of the straight reaction tube T passages is enabled in upper direction by flexible, constant force hanger systems installed at the upper reverse bends of the tubes T.

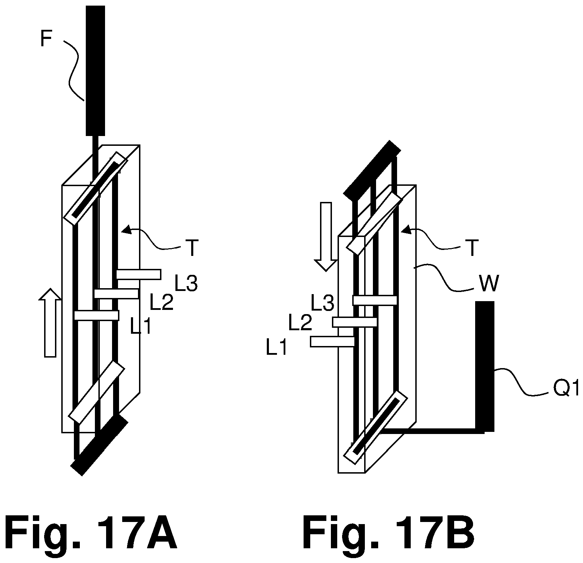

As illustrated in Figures 17A and 17B, general arrangements of a system implementation according to the embodiment shown in Figure 2, but using single pass reactor tubes T without reverse bends are illustrated.

## Claims

1. An apparatus for performing a chemical reaction, the apparatus including a reactor chamber (B) and reaction tubes (T) arranged in the reactor chamber (B), the reaction chamber (B) being surrounded by a thermally isolating reactor wall (W), wherein the reaction tubes (T) are electrically interconnected at a first position with a first electrical starbridge (S, S2, S4) and at a second position with a second electrical starbridge (S1, S3, S5), the first and the second positions being positions within the reaction chamber (B), wherein the reaction tubes (T) are electrically connected to phases of an electrical power supply (AC) using connectors (L1, L2, L3) between the first and second positions, and wherein at least one of the first electrical starbridge (S, S2, S4) and the second electrical starbridge (S1, S3) fluidly interconnects two or more of the reaction tubes (T) which it electrically interconnects.

2. The apparatus according to claim 1, wherein the second electrical starbridge (S1, S3) fluidly interconnects two or more of the reaction tubes (T) which it electrically interconnects and fluidly connects these reaction tubes (T) to one or multiple gas coolers (Q1).

3. The method according to claim 1 or 2, wherein a third electrical starbridge (S2') and further reaction tubes (T) are provided, the second electrical starbridge (S1, S3) at least electrically interconnecting the further reaction tubes (T) at the second position, and the third electrical starbridge (S2') at least electrically interconnecting the further reaction tubes (T) at a third position, the further reaction tubes (T) being electrically connected to the phases of the electrical power supply (AC) using further connectors (L1, L2, L3) between the second and the third positions.

4. The apparatus according to claim 2 or 3, wherein the reaction tubes (T) which the second electrical starbridge (S3) electrically and fluidly interconnects merge in the second electrical starbridge (S3) and/or in proximity to the second electrical starbridge (S3) in an angle of more than 10 and less than 80°.

5. The apparatus according to any one of claims 2 to 4, wherein the reaction tubes which the first and/or the third electrical starbridge electrically and fluidly interconnect emerge from the first and/or third electrical starbridge and/or from the proximity of the first and/or third electrical starbridge in an angle of more than 10 and less than 80°.

6. The apparatus according to any one of the preceding claims, wherein the electrical power supply (AC) is configured to provide a current comprising N phases, wherein a number of the connectors (L1, L2, L3) is M, and wherein each of the connectors (L1, L2, L3) is connected one of M reaction tubes (T), wherein N is an integer of at least two, and wherein M is equal to N or a multiple of N.

7. The apparatus according to claim 6, wherein M is a multiple of N and wherein at least two adjacent ones of the M reaction tubes (T) are connected to the same of the N phases of the electrical power supply.

8. The apparatus according to claim 6, wherein M is a multiple of N and wherein no adjacent ones of the M reaction tubes (T) are connected to the same of the N phases of the electrical power supply.

9. The apparatus according to any of the preceding claims, wherein the first (S2) and/or a third electrical starbridge (S2')fluidly interconnects the reaction tubes (T) which it electrically interconnects and fluidly connects these reaction tubes (T) to a feed gas line (F).

10. The apparatus according to claim 9, wherein the first electrical starbridge (S2) is separated by a thermal isolation (I) from an interior of the reactor chamber (B).

11. The apparatus according to claim 9 or 10, wherein one or more laval nozzles (L) are provided in or in proximity to the first and/or third electrical starbridge (S2, S4, S2').

12. The apparatus according to any one of the preceding claims, wherein the reaction tubes have a return bend and/or split in the reactor chamber (B).

13. The apparatus according to any of the preceding claims, said reaction being selected from a steam cracking reaction, a partial oxidation reaction, various reforming reactions, in particular steam reforming, dry reforming, mixed reforming, a reaction for the dehydrogenation of alkanes, a reverse water gas shift reaction of carbon dioxide and hydrogen to carbon monoxide and water, a dehydrogenation of oxygenates such as a reaction of methanol to formaldehyde and hydrogen, cracking of ammonia to yield nitrogen and hydrogen, dehydrogenation of liquid organic hydrogen carriers, and reforming of methanol and glycerol.

14. A method for performing a chemical reaction, the method comprising the steps of providing an apparatus according to any one of the preceding claims, passing a reaction feed through the reaction tubes (T), and resistance heating the reaction tubes using the phases of the electrical power supply (AC).
